# EUROPEAN PATENT APPLICATION

(11) **EP 4 501 532 A1**
(43) Date of publication of application: **05.02.2025**
(21) Application number: 23864950.3
(22) Date of filing: 09.03.2023
(51) Int. Cl.: B23P 23/04, B23K 20/12, B23P 11/00, B23Q 15/12, B23Q 15/18, B23Q 17/09, G05B 19/404

(54) **COMBINED MACHINING APPARATUS, CONTROL METHOD FOR COMBINED MACHINING APPARATUS, AND PROGRAM FOR EXECUTING CONTROL METHOD**

(30) Priority: 16.09.2022 WO PCT/JP2022/034766
(71) Applicant: Yamazaki Mazak Corporation, Niwa-gun, Aichi 480-0197 (JP)
(72) Inventor: MATSUBARA, Eiji, Niwa-gun, Aichi 480-0197 (JP); KAKIUCHI, Susumu, Niwa-gun, Aichi 480-0197 (JP); MINATANI, Masayasu, Niwa-gun, Aichi 480-0197 (JP); KATO, Takumi, Niwa-gun, Aichi 480-0197 (JP); KIMURA, Kiyoshi, Niwa-gun, Aichi 480-0197 (JP)
(74) Representative: TBK
(86) International application number: PCT/JP2023/009006
(87) International publication number: WO 2024/057584

(57) **Abstract**

A method for controlling a combined machining apparatus to perform cutting and friction stir welding, the method including: obtaining tool information indicating whether each of a plurality of tools attachable to the combined machining apparatus is a cutting tool or a friction stir welding tool; obtaining a command indicating a working tool of the plurality of tools to be called by a machining program executed by the combined machining apparatus; determining whether the working tool is the cutting tool or the friction stir welding tool, based on the tool information and the command; upon determination that the working tool is the cutting tool, enabling compensation of a position of the working tool in the cutting, based on a temperature detected by a temperature sensor provided in the combined machining apparatus; and upon determination that the working tool is the friction stir welding tool, obtaining a load applied to a motor that rotates the working tool and enabling the compensation of the position of the working tool based on the load in the friction stir welding.

## Description

### Technical Field

The present invention relates to a combined machining apparatus, a method for controlling the combined machining apparatus, and a program for performing the method.

### Background Art

A combined machining apparatus capable of both cutting and friction stir welding is known (for example, Patent Literature 1). There are two known methods for controlling a machine tool, including position control suitable for the cutting (for example, Patent Literature 2), and load control of a motor (spindle motor) that rotates the spindle, by controlling the insertion depth of a friction stir welding tool (for example, Patent Literature 3).

### Citation List

### Patent Literature

PTL1: WO 2017/115401
PTL2: WO 2016/067874
PTL3: JP 2003-080380 A

### Summary of Invention

### Technical Problem

Patent Literature 1 describes a machine tool to which a friction stir welding tool and a cutting tool are both attachable. In the case of a welding program, the friction stir welding tool is called and attached, and in the case of a cutting program, the cutting tool is called and attached. The tool is called, based on the pin number or the pin symbol written in the machining program. However, the machine tool of Patent Literature 1 does not recognize whether the currently running machining program is the welding program or the cutting program. It simply performs an operation of moving the tool to a position as operated by the machining program. Similarly, the machine tool of Patent Literature 1 does not identify whether the tool attached to the machining head is the friction stir welding tool or the cutting tool. It simply identifies the pin number or the pin symbol written in the machining program, or the pin number or the pin symbol of the tool attached to the machining head. As described above, in Patent Literature 1, means for identifying whether the attached tool is the friction stir welding or the cutting is not included. Hence, even though Patent Literature 2 in which the position control is described and Patent Literature 3 in which the load control is described are combined with Patent Literature 1, it is impossible to automatically switch between the position control and the load control.

It is an object of the present invention to provide a combined machining apparatus, a method for controlling the combined machining apparatus, and a program capable of automatically switching between position control and load control in accordance with the type of a tool.

A method according to a first embodiment of the present disclosure is a method for controlling a combined machining apparatus to perform cutting and friction stir welding, and includes obtaining tool information indicating whether each of a plurality of tools attachable to the combined machining apparatus is a cutting tool or a friction stir welding tool. The method includes obtaining a command indicating a working tool of the plurality of tools to be called by a machining program executed by the combined machining apparatus. The method includes determining whether the working tool is the cutting tool or the friction stir welding tool, based on the tool information and the command. The method includes, upon determination that the working tool is the cutting tool, enabling compensation of a position of the working tool in the cutting, based on a temperature detected by a temperature sensor provided in the combined machining apparatus. The method includes, upon determination that the working tool is the friction stir welding tool, obtaining a load applied to a motor that rotates the working tool and enabling the compensation of the position of the working tool based on the load in the friction stir welding.

According to a second embodiment of the present disclosure, in the method according to the first embodiment, obtaining the load applied to the motor includes obtaining either a drive current of the motor or drive torque of the motor.

According to a third embodiment of the present disclosure, in the method according to the first embodiment or the second embodiment, the compensation of the position of the working tool based on the load is compensation of a position in a rotation axis direction of the working tool.

According to a fourth embodiment of the present disclosure, in the method according to one of the first embodiment to the third embodiment, enabling the compensation of the position of the working tool based on the temperature includes estimating a position offset from a position of a cutting edge of the working tool in a case where the temperature detected by the temperature sensor is a reference temperature, based on the temperature detected by the temperature sensor, and performing the compensation of the position of the working tool in the cutting, based on the position offset.

According to a fifth embodiment of the present disclosure, in the method according to one of the first embodiment to the fourth embodiment, enabling the compensation of the position of the working tool based on the temperature includes ignoring a load adjustment code, even though the load adjustment code for instructing the compensation of the position of the working tool based on the load is included in a part that specifies machining with the working tool in the machining program.

According to a sixth embodiment of the present disclosure, in the method according to the fifth embodiment, enabling the compensation of the position of the working tool based on the temperature includes notifying an error message, in a case where a load adjustment code for instructing the compensation of the position of the working tool based on the load is included in the part that specifies the machining with the working tool in the machining program.

According to a seventh embodiment of the present disclosure, in the method according to one of the first embodiment to the sixth embodiment, enabling the compensation of the position of the working tool based on the load includes executing a load adjustment code, in a case where the load adjustment code for instructing the compensation of the position of the working tool based on the load is included in a part that specifies machining with the working tool in the machining program.

According to an eighth embodiment of the present disclosure, in the method according to the seventh embodiment, enabling the compensation of the position of the working tool based on the load includes performing neither the compensation of the position of the working tool based on the load nor the compensation of the position of the working tool based on the temperature, unless the load adjustment code is included in the part that specifies the machining with the working tool in the machining program.

According to a ninth embodiment of the present disclosure, the method according to one of the first embodiment to the eighth embodiment further includes storing, in storage means, the tool information input by a user. Obtaining the tool information includes reading the tool information from the storage means.

According to a tenth embodiment of the present disclosure, in the method according to one of the first embodiment to the ninth embodiment, the compensation of the position of the working tool based on the load includes performing feedback-compensation of the position of the working tool without a significant change in the load.

A program according to an eleventh embodiment of the present disclosure includes an instruction for causing a hardware processor to perform processing of the method according to one of the first embodiment to the tenth embodiment, when the hardware processor of the combined machining apparatus performs the processing.

A combined machining apparatus according to a twelfth embodiment of the present disclosure includes: means for performing the method according to one of the first embodiment to the tenth embodiment; storage means configured to store the tool information; a spindle to which the cutting tool and the friction stir welding tool are both attachable; a motor configured to rotate the spindle; a driver configured to send a drive signal for driving the motor; and the temperature sensor.

According to a thirteenth embodiment of the present disclosure, the combined machining apparatus according to the twelfth embodiment further includes: a tool magazine capable of storing both the cutting tool and the friction stir welding tool; and a tool exchanger configured to exchange tools between the tool magazine and the spindle.

According to a fourteenth embodiment of the present disclosure, the combined machining apparatus according to the twelfth embodiment or the thirteenth embodiment further includes an interface for a user to input the tool information.

According to a fifteenth embodiment of the present disclosure, in the combined machining apparatus according to one of the twelfth embodiment to the fourteenth embodiment, the storage means is a memory. Means for performing processing of the method according to one of the first embodiment to the tenth embodiment includes the program according to the eleventh embodiment stored in the memory, and a hardware processor that executes the program.

In the method according to the first embodiment, the program according to the eleventh embodiment for causing the hardware processor to perform the processing of the method according to the first embodiment, and the combined machining apparatus according to the twelfth embodiment including the means for performing the processing of the method according to the first embodiment, upon determination that the working tool is the cutting tool, the compensation of the position of the working tool based on the temperature, that is, the position control is enabled, and upon determination that the working tool is the friction stir welding tool, the compensation of the position of the working tool based on the load, that is, the load control is enabled. This enables automatically switching between the position control and the load control in accordance with the type of the tool.

In the method according to the second embodiment, the program according to the eleventh embodiment for causing the hardware processor to perform the processing of the method according to the second embodiment, and the combined machining apparatus according to the twelfth embodiment including the means for performing the processing of the method according to the second embodiment, by using the drive current of the motor that is the input into the motor or the drive torque that can be calculated with a characteristic of the motor from the drive current, it becomes possible to calculate the motor load in real time. It is to be noted that in the case where the drive torque is used, there is no dependency on the motor characteristic. Thus, it becomes possible to apply to various machine tools having different types of motors.

In the method according to the third embodiment, the program according to the eleventh embodiment for causing the hardware processor to perform the processing of the method according to the third embodiment, and the combined machining apparatus according to the twelfth embodiment including the means for performing the processing of the method according to the third embodiment, the position compensation in the rotation axis direction efficiently reduces cutting edge resistance, and the machining quality can be improved.

In the method according to the fourth embodiment, the program according to the eleventh embodiment for causing the hardware processor to perform the processing of the method according to the fourth embodiment, and the combined machining apparatus according to the twelfth embodiment including the means for performing the processing of the method according to the fourth embodiment, in the case where the working tool is the cutting tool, the cutting edge position of the working tool based on the temperature is performed, so that the machining quality in the cutting can be improved.

In the method according to the fifth embodiment, the program according to the eleventh embodiment for causing the hardware processor to perform the processing of the method according to the fifth embodiment, and the combined machining apparatus according to the twelfth embodiment including the means for performing the processing of the method according to the fifth embodiment, in the case where the working tool is the cutting tool, the load adjustment code is ignored. Even though the load adjustment code is erroneously input into the program, the position control essentially necessary for the cutting is enabled. As a result, the machining quality of the cutting can be improved.

In the method according to the sixth embodiment, the program according to the eleventh embodiment for causing the hardware processor to perform the processing of the method according to the sixth embodiment, and the combined machining apparatus according to the twelfth embodiment including the means for performing the processing of the method according to the sixth embodiment, in the case where the working tool is the cutting tool, if the load adjustment code is erroneously input into the program, an error message will be displayed. Thus, the user is able to notice that the user has input an invalid code, and user experience can be improved.

In the method according to the seventh embodiment, the program according to the eleventh embodiment for causing the hardware processor to perform the processing of the method according to the seventh embodiment, and the combined machining apparatus according to the twelfth embodiment including the means for performing the processing of the method according to the seventh embodiment, in the case where the working tool is the friction stir welding tool, the load adjustment code makes it possible to define conducting of the load control, so that the user can freely determine whether to conduct the load control.

In the method according to the eighth embodiment, the program according to the eleventh embodiment for causing the hardware processor to perform the processing of the method according to the eighth embodiment, and the combined machining apparatus according to the twelfth embodiment including the means for performing the processing of the method according to the eighth embodiment, in the case where the working tool is the friction stir welding tool, it is possible to configure that neither the position control nor the load control is conducted without the load adjustment code, so that the user can selectively execute an original code of the program.

In the method according to the ninth embodiment, the program according to the eleventh embodiment for causing the hardware processor to perform the processing of the method according to the ninth embodiment, and the combined machining apparatus according to the twelfth embodiment including the means for performing the processing of the method according to the ninth embodiment, the user registers, in the storage means, whether a new tool is a cutting tool or a friction stir welding tool, and the combined machining apparatus is capable of automatically determining whether the new tool is the cutting tool or the friction stir welding tool, based on the information registered in the storage means.

In the method according to the tenth embodiment, the program according to the eleventh embodiment for causing the hardware processor to perform the processing of the method according to the tenth embodiment, and the combined machining apparatus according to the twelfth embodiment including the means for performing the processing of the method according to the tenth embodiment, the load control can be conducted to make the load applied to the spindle motor constant, so that the machining quality of the friction stir welding can be improved.

In the combined machining apparatus according to the thirteenth embodiment, the cutting tool and the friction stir welding tool can be stored without distinguishing the type of the tool, and thus tool storage pockets of a tool magazine can be effectively utilized. Furthermore, the cutting tool and the friction stir welding tool can be mechanically exchanged, so that the manufacturing process that enables automation can be increased.

In the combined machining apparatus according to the fourteenth embodiment, the user is able to input the tool information from the combined machining apparatus, and thus the registration work of the tool information is facilitated. In addition, it becomes possible to confirm whether the tool is the cutting tool or the friction stir welding tool from the tool information. This eliminates the need for confirming what tool is attached to the tool magazine of the combined machining apparatus, and facilitates creation and correction of the program.

In the combined machining apparatus according to the fifteenth embodiment, the control according to the first embodiment to the tenth embodiment can be conducted by a general-purpose architecture, and the manufacturing cost of the combined machining apparatus can be reduced.

### Effects of Invention

The technique disclosed in the present application provides a combined machining apparatus, a method for controlling the combined machining apparatus, and a program capable of automatically switching between position control and load control in accordance with the type of a tool.

### Brief Description of Drawings

[FIG. 1] FIG. 1 illustrates an outer appearance configuration of a combined machining apparatus according to an embodiment.
[FIG. 2] FIG. 2 is a diagram of a configuration of an electronic circuit of the combined machining apparatus according to an embodiment.
[FIG. 3] FIG. 3 is a cross-sectional view of an overview of a machining head of the combined machining apparatus illustrated in FIG. 1.
[FIG. 4] FIG. 4 is a cross-sectional view of an overview of the machining head of the combined machining apparatus illustrated in FIG. 1.
[FIG. 5] FIG. 5 is an enlarged perspective view of a tool magazine and a tool exchanger.
[FIG. 6] FIG. 6 is a flowchart of a method for controlling the combined machining apparatus, that is, operations of the control program.
[FIG. 7A] FIG. 7A is an example of tool data of a cutting tool.
[FIG. 7B] FIG. 7B is an example of tool data of a friction stir welding tool.
[FIG. 8] FIG. 8 is a flowchart of detailed operations of step S2.
[FIG. 9] FIG. 9 is a flowchart of detailed operations of step S3.
[FIG. 10] FIG. 10 is a flowchart of detailed operations step S4.
[FIG. 11] FIG. 11 is a flowchart of detailed operations of step S5.
[FIG. 12A] FIG. 12A is an example of a machining program for cutting.
[FIG. 12B] FIG. 12B is an example of a machining program for friction stir welding.
[FIG. 13A] FIG. 13A is another example of the machining program for the cutting.
[FIG. 13B] FIG. 13B is another example of the machining program for the friction stir welding.

### Description of Embodiments

Hereinafter, this invention will be described with reference to the accompanying drawings, wherein like reference numerals designate corresponding or identical elements throughout the various drawings.

### <Embodiments>

### <Configuration of Combined Machining Apparatus 1>

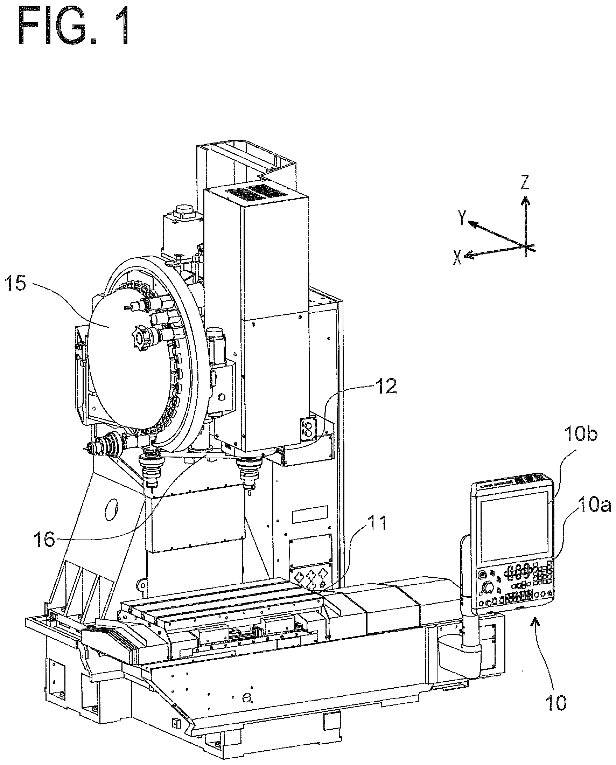

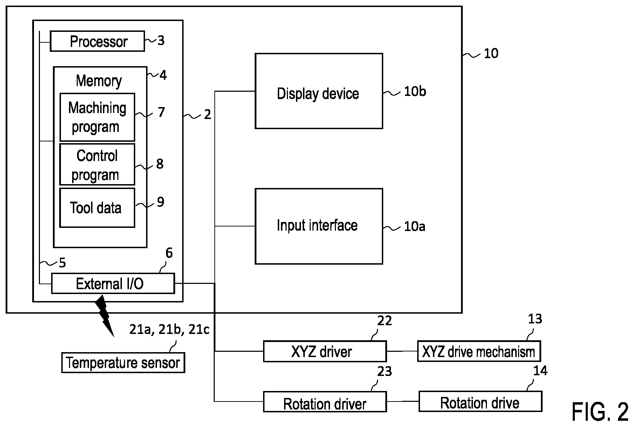

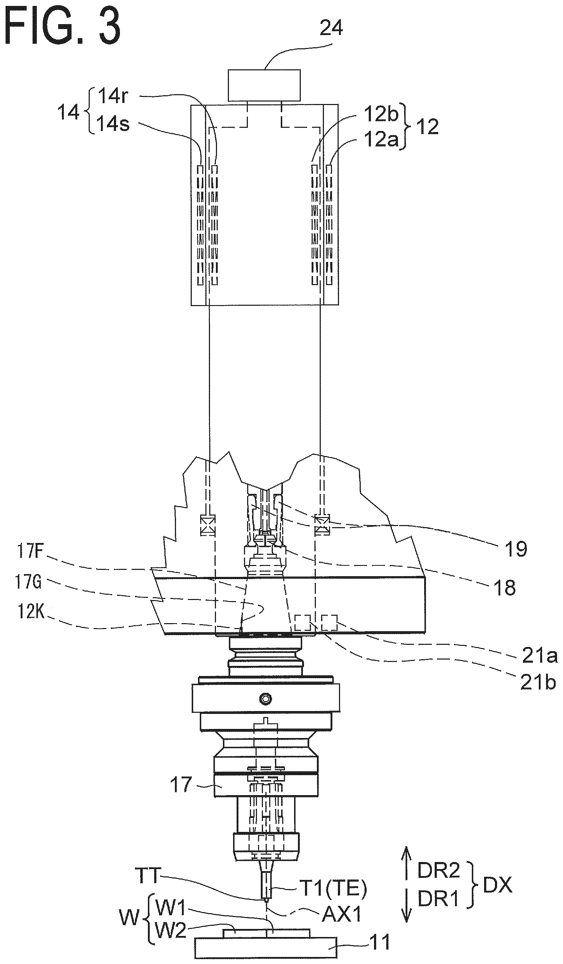

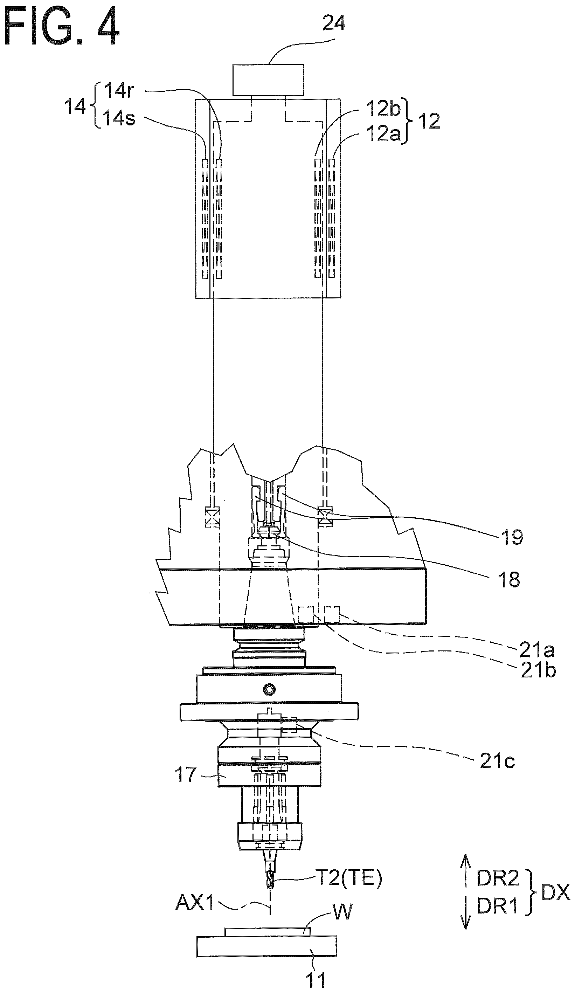

FIG. 1 is a perspective view of a combined machining apparatus 1 for cutting and friction stir welding according to an embodiment, illustrating an outer appearance configuration of the combined machining apparatus 1. FIG. 2 is a diagram of a configuration of an electronic circuit of the combined machining apparatus 1 according to an embodiment. As illustrated in FIG. 1, the combined machining apparatus 1 includes: a control panel 10; a machining table 11, which holds a workpiece W (see FIGs. 3 and 4); a machining head 12, which is movable in each of XYZ directions with respect to the workpiece W; a tool magazine 15; and a tool exchanger 16. It is to be noted that although not illustrated in FIG. 1, the combined machining apparatus 1 may further include a cover that covers the above configuration, except for the control panel 10.

Referring to FIG. 2, the control panel 10 includes: a numerical controller 2, which controls the operations of the combined machining apparatus 1; an input interface 10a, such as a key, a button, a dial, and/or a touch panel, for a user to input a machining condition or the like in the machining control conducted by the numerical controller 2; and a display device 10b, which displays, for the user, the machining condition and/or detection results of various sensors. The numerical controller 2 includes a hardware processor 3, a memory 4, a bus 5, and an input and output interface 6. The memory 4 stores machining programs 7 including a welding program and a cutting program, control programs 8 for controlling the tools, and tool data 9 in which tool information indicating whether the tool is a cutting tool or a friction stir welding tool is stored. The memory 4 may be referred to as storage means. That is, the storage means is configured to store the tool information. The hardware processor 3 executes various programs. In the following embodiments, the hardware processor 3 may be simply referred to as the processor 3.

FIGs. 3 and 4 are each a cross-sectional view of an overview of the machining head 12 of the combined machining apparatus 1 illustrated in FIG. 1. As illustrated in FIGs. 3 and 4, the machining head 12 includes: a spindle frame 12a, which is hollow, and which constitutes a housing; and a spindle 12b, which is included in the spindle frame 12a. The spindle frame 12a of the machining head 12 is attached to an XYZ drive mechanism 13, which is illustrated in FIG. 2, and is movable in three-axis directions of XYZ. The XYZ drive mechanism 13 preferably includes a plurality of motors that move the spindle frame 12a in each of the directions of XYZ, and a plurality of rotation-translation converting mechanisms, which are respectively connected with the plurality of motors, and each of which is made up of a ball screw, a gear, and the like. In addition, one end of the spindle 12b is connected with, for example, a rotation drive 14 such as a motor, and is configured to rotate about a rotation axis AX1. The rotation drive 14 includes: a stator 14s, which is fixed to the spindle frame 12a; and a rotor 14r, which is fixed to the spindle 12b. The rotation drive 14 is preferably an AC induction motor, but may be an AC synchronous motor or a DC motor. The XYZ drive mechanism 13 is connected with an XYZ driver 22, which feeds a drive current for controlling rotations of the above plurality of motors, and the rotation drive 14 is connected with a rotation driver 23, which feeds a drive current to the rotation drive 14. The XYZ driver 22 and the rotation driver 23 are connected through the input and output interface 6 with the numerical controller 2.

A tool holder 17 is detachably attached to a lower end of the machining head 12. FIG. 3 illustrates a friction stir welding tool T1 according to an embodiment. The friction stir welding refers to welding two workpieces W1 and W2 together, while a probe TT at a tip end of the tool T1 is being rotated, by inserting the probe TT between the two workpieces W1 and W2 to soften and stir the respective metal materials with frictional heat. FIG. 4 illustrates a cutting tool T2 according to an embodiment. As illustrated in FIGs. 3 and 4, the tools T1 and T2 are held by the tool holder 17.

The tool holder 17 includes: a pull stud 18 on its upper end; and a holder flange 17F, which has a substantially truncated cone shape, and which is connected with the pull stud 18. The holder flange 17F includes a groove portion 17G, which is cut away in a radial direction with respect to the rotation axis AX1 of the spindle 12b. On the other hand, the spindle 12b includes: a collet chuck 19, which can be fit with the pull stud 18; and a key portion 12K, which can be fit with the groove portion 17G. The collet chuck 19 is movable in rotation axis directions DX along the rotation axis AX1 of the spindle 12b. When the collet chuck 19 shifts from the pull stud 18 in a first direction DR1 toward the tool T1 or T2, out of the rotation axis directions DX, the collet chuck 19 is configured to open in the radial direction with respect to the rotation axis AX1, and the pull stud 18 becomes detachable. When the collet chuck 19 shifts from the tool T1 or T2 in a second direction DR2 toward the pull stud 18, out of the rotation axis directions DX, the collet chuck 19 is configured to close in the radial direction with respect to the rotation axis AX1, and is fit with the pull stud 18. The pull stud 18 is fit with the collet chuck 19, and thus the tool holder 17 is fixed to the spindle 12b. In this situation, the key portion 12K of the spindle 12b is fit into the groove portion 17G of the tool holder 17, and thus restricts the rotation of the tool holder 17 with respect to the spindle 12b. Therefore, the cutting tool T2 and the friction stir welding tool T1 are both attachable to the spindle 12b. In the following embodiments, the tool attached to the spindle 12b will be referred to as a working tool TE.

The rotation driver 23 conducts feedback control for controlling the drive current of the rotation drive 14 to achieve a target spindle rotation speed that is set by the machining program 7. In a case where the rotation drive 14 is an AC induction motor, assuming that the rotation drive 14 is vector-controlled, out of a command current of d-axis and a command current of q-axis, the command current of q-axis is controlled as the drive current. That is, when the rotation speed detected by a rotation speed detection sensor 24 such as an encoder attached to the rotation drive 14 is smaller than the target spindle rotation speed, the rotation driver 23 increases the drive current, and when the rotation speed is greater than the target spindle rotation speed, the rotation driver 23 decreases the drive current. This drive current is fed to the numerical controller 2 through the input and output interface 6.

As illustrated in FIGs. 3 and 4, the spindle frame 12a and the spindle 12b include temperature sensors 21a and 21b such as thermocouples. Electric power is supplied to the temperature sensor 21a through wire, and electric power is supplied to the temperature sensor 21b by an electromagnetic induction coupler, not illustrated. The temperature sensors 21a and 21b are each capable of transmitting a value representing the detected temperature to the numerical controller 2 on wireless communication. The temperature sensor 21a may transmit, to the numerical controller 2, the value representing the detected temperature through cable instead of wirelessly. As illustrated in FIG. 4, the cutting tool T2 includes a temperature sensor 21c. Electric power is supplied to the temperature sensor 21c by an electromagnetic induction coupler, not illustrated, and the temperature sensor 21c is capable of transmitting a value representing the detected temperature to the numerical controller 2 on wireless communication. It is to be noted that any of the temperature sensors 21a to 21c may be omitted.

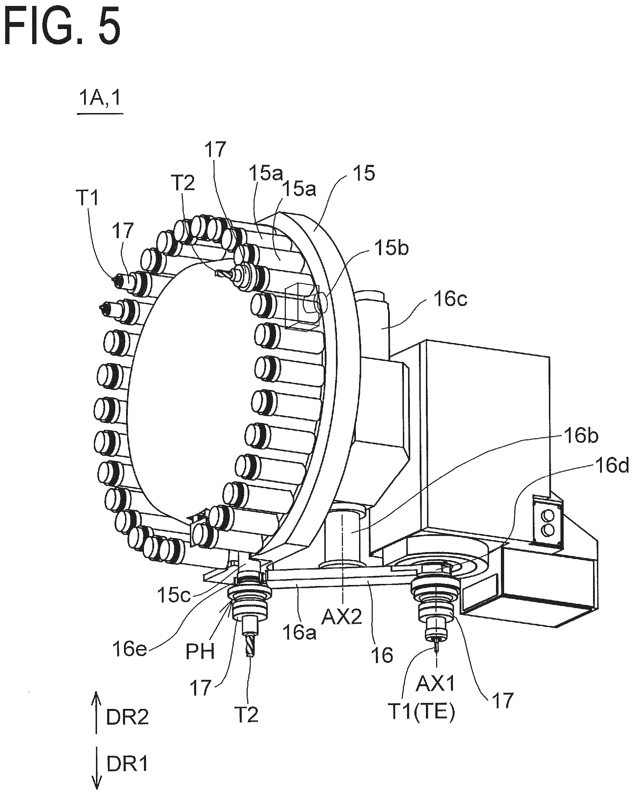

The tool magazine 15 can storing both the tool holder 17, which holds the friction stir welding tool T1, and the tool holder 17, which holds the cutting tool T2. FIG. 5 is an enlarged perspective view of the tool magazine 15 and the tool exchanger 16. The tool magazine 15 includes: a plurality of holding portions 15a, which respectively hold the plurality of tool holders 17; and a holding portion mover 15b, which moves the plurality of holding portions 15a along a circumferential path. The tool magazine 15 may include a holder remover 15c, which moves the tool holder 17 stored in the tool magazine 15 to a standby position PH, which is accessible from the tool exchanger 16.

The tool exchanger 16 is configured to exchange the tools between the tool magazine 15 and the spindle 12b. The tool exchanger 16 includes a tool exchange arm 16a, an arm rotation device 16b, which rotates the tool exchange arm 16a, and an arm mover 16c, which linearly moves the tool exchange arm 16a. The arm rotation device 16b causes the tool exchange arm 16a to rotate about an additional rotation axis AX2. In addition, the arm mover 16c moves the tool exchange arm 16a in a direction parallel to the additional rotation axis AX2. The tool exchanger 16 includes grip portions 16d and 16e each having a configuration similar to a magic hand capable of gripping the tool holder 17 before and after the tool holder 17 is exchanged.

### <Operations of Control Program>

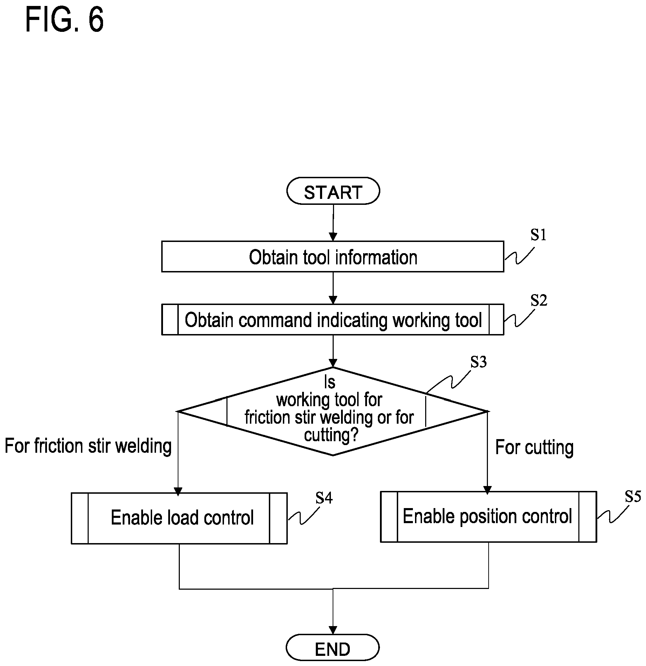

Next, operations of the control program 8 in FIG. 2, that is, details of control of the combined machining apparatus 1 will be described. FIG. 6 is a flowchart of a method for controlling the combined machining apparatus 1, that is, the operations of the control program 8. The control program 8 includes commands for causing the hardware processor 3 to perform processing of the method described in FIG. 6 and FIGs. 8 to 11 accompanying FIG. 6, when the control program 8 is executed by the hardware processor 3 of the combined machining apparatus 1. Means for performing the processing of the method described in FIG. 6 and FIGs. 8 to 11 accompanying FIG. 6 includes the control program 8 stored in the memory 4 and the hardware processor 3, which executes the control program 8. Referring to FIG. 6, in step S1, in the method, the processor 3, which executes the control program 8, obtains tool information (tool data 9) indicating whether each of the plurality of tools that are attachable to the combined machining apparatus 1 is the cutting tool T2 or the friction stir welding tool T1. Obtaining the tool information includes reading the tool information from the memory 4 (storage means).

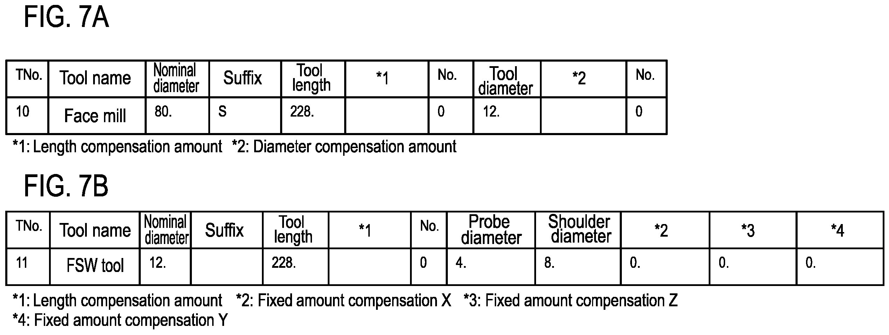

FIG. 7A is an example of the tool data 9 of the cutting tool T2. FIG. 7B is an example of the tool data 9 of the friction stir welding tool T1. It is to be noted that the tool data 9 of the cutting tool T2 may include another parameter for compensation. Referring to FIGs. 7A and 7B, TNo. corresponds to a T code. The T code indicates by which holding portion 15a of the plurality of holding portions 15a of the tool magazine 15 the tool holder 17 is held in accordance with the T code. Therefore, different T codes are respectively assigned to the plurality of different holding portions 15a. The T code corresponds to a combination of a tool name, a nominal diameter, and a suffix. Any alphabet can be assigned to the suffix. Therefore, it becomes possible to assign different T codes by changing the suffix, out of the plurality of the same tools.

Whether the tool corresponding to each T code is the friction stir welding tool T1 or the cutting tool T2 can be determined, based on the tool name that is one of the commands indicating the tool. The tool name of the friction stir welding tool T1 is an FSW tool. The tool name of the cutting tool T2 is a name other than the FSW tool. Referring to FIGs. 7A and 7B, in addition to the T code, the tool name, the nominal diameter, and the suffix, the tool data 9 may include another piece of attribute information of the tool such as a tool length, a tool diameter, a probe diameter, or a shoulder diameter (the part of the tool T1 having a larger diameter than the probe TT and to be in contact with the material surface at the time of welding), and/or a compensation parameter in consideration of wear of the tool or the like, such as a length compensation amount or a diameter compensation amount. However, the tool data 9 may not necessarily include information other than the T code, the tool name, the nominal diameter, and the suffix. With regard to whether the tool corresponding to each T code is the friction stir welding tool T1 or the cutting tool T2, the case where the tool name is the FSW tool has been described as one of the commands for the tool. However, as illustrated in FIGs. 7A and 7B, in comparing between the cutting tool and the friction stir welding tool, the friction stir welding tool includes tool-specific items for the friction stir welding, such as the probe diameter and the shoulder diameter. For this reason, in a case where the machining program 7 has a tool-specific item, the processor 3, which executes the control program 8, may determine the tool from the tool-specific item for the friction stir welding as the command indicating the tool, regardless of the tool name.

Next, in step S2 of FIG. 6, in the method, the processor 3, which executes the control program 8, obtains a command indicating a working tool TE to be used in each machining process (to be continuously performed by one tool for the cutting or friction stir welding) to be called by the machining program 7. Such a command is, specifically, a command indicating the tool name. In step S3, in the method, the processor 3, which executes the control program 8, determines whether the working tool TE is the friction stir welding tool T1 or the cutting tool T2, based on the tool information and such a command. More specifically, in a case where the tool name of the working tool TE is the FSW tool, the processor 3, which executes the control program 8, determines that the working tool TE is the friction stir welding tool T1. In a case where the tool name of the working tool TE is a name other than the FSW tool, the processor 3, which executes the control program 8, determines that the working tool TE is the cutting tool T2.

In the method, in step S3, in the case where the processor 3, which executes the control program 8, determines that the working tool TE is the friction stir welding tool T1, the processor 3 enables the compensation of the position (load control) of the working tool TE based on the load applied to the rotation drive 14 that has been detected by the rotation driver 23, in step S4. In such load control, for example, as also disclosed in Patent Literature 3, the processor 3, which executes the control program 8, controls an insertion position of the tool T1 (a position command to be sent to the XYZ drive mechanism 13) so that the load applied to the rotation drive 14 is closer to a target load corresponding to an insertion depth of the tool T1 (that can be obtained from the XYZ drive mechanism 13). This load may be a drive current value of the rotation drive 14. Such a drive current value may be an absolute value of a sequentially obtained current value, but may be a square root of a value obtained by adding together squared values of the current values that have been obtained within a predetermined period of time. In addition, the load may be a load factor represented as a ratio of the drive current value output from the rotation driver 23 to the maximum drive current value of the rotation drive 14. Further, the load may be a load factor represented as a ratio of the drive current value output from the rotation driver 23 to the rated current value of the rotation drive 14. Alternatively, the load may be the drive torque of the rotation drive 14 that is obtained from the drive current value output from the rotation driver 23. In a case where the rotation drive 14 is a DC motor, the drive torque is proportional to the motor current, and thus the load is calculated, based on a torque constant that is determined from a motor characteristic. In addition, also in a case where the rotation drive 14 is an AC induction motor or an AC synchronous motor, assuming that vector-control is being conducted, the drive torque and the q-axis current, which is the command current of a torque current component, are considered to be in a proportional relationship. Thus, the load can be calculated from the q-axis current by using a characteristic value of the motor in a similar manner to the case of the DC motor. Preferably, the compensation of the position of the working tool TE based on the load includes feedback-compensation of the position of the working tool TE without a significant change in the load. It is to be noted that the compensation of the position of the working tool TE based on the load denotes compensation of the position of the working tool TE in the rotation axis direction DX.

In the method, in the case where the processor 3, which executes the control program 8, determines in step S3 that the working tool TE is the cutting tool T2, the processor 3 enables the compensation of the position (position control) of the working tool TE based on temperatures that have been detected by the temperature sensors 21a to 21c in the cutting, in step S5. In such position control, for example, as disclosed by WO 2021/044491, a position offset (thermal displacement) from the position of the cutting edge of the working tool TE, in a case where the temperatures detected by the temperature sensors 21a to 21c are each a reference temperature, is estimated, based on the temperatures that have been detected by the temperature sensors 21a to 21c, and the position of the working tool TE is compensated, based on the position offset (thermal displacement) in the cutting. In this case, as disclosed by WO 2021/044491, the position offset may be estimated by multiplying a temperature difference from the reference temperature for every one of the temperature sensors 21a to 21c by a predetermined coefficient and obtaining a sum of multiplication results, or a cutting edge offset corresponding to the temperature difference of each of the temperature sensors 21a to 21c from the reference temperature may be stored in a table or the like, and the position offset may be estimated by referring to the table. It is to be noted that the compensation of the position of the working tool TE based on the temperature is intended to mean the compensation of the position of the working tool TE in the rotation axis direction DX.

The steps S2, S4, and S5 described above are different depending on the program format of the machining program 7. Hereinafter, specific processing based on the program format of the machining program 7 will be described.

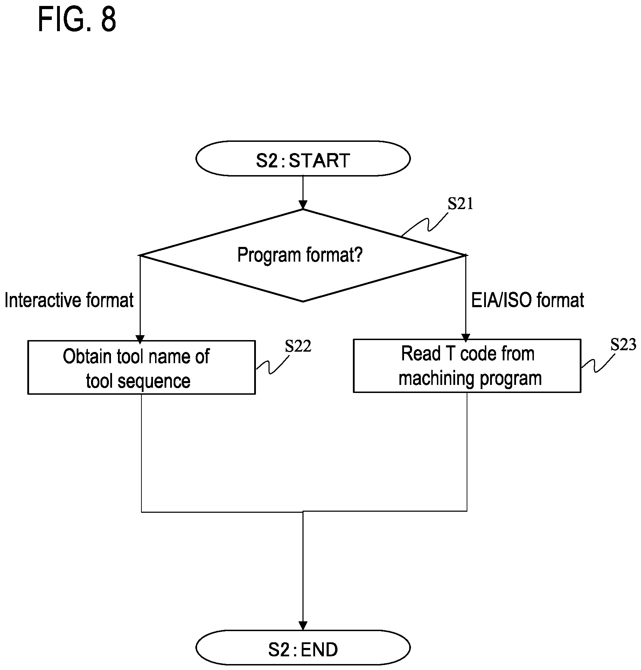

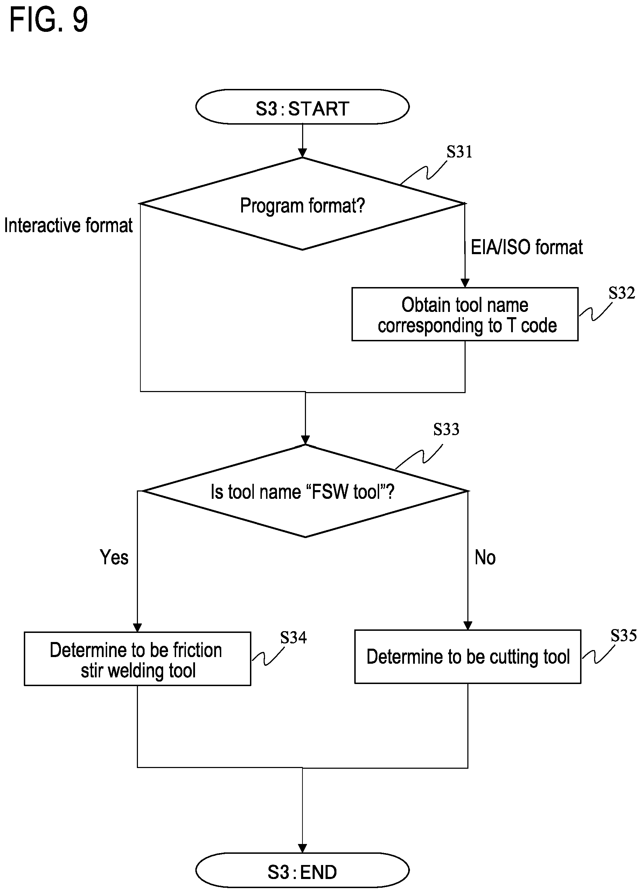

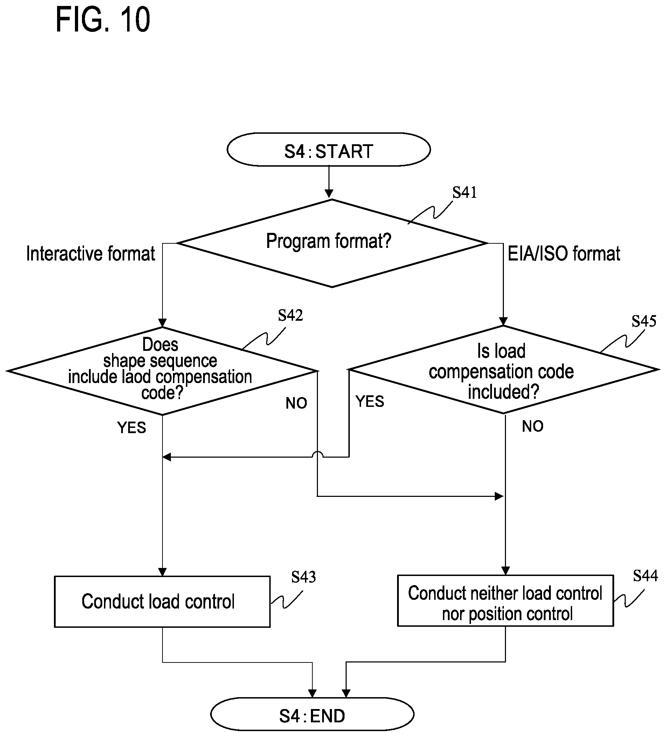

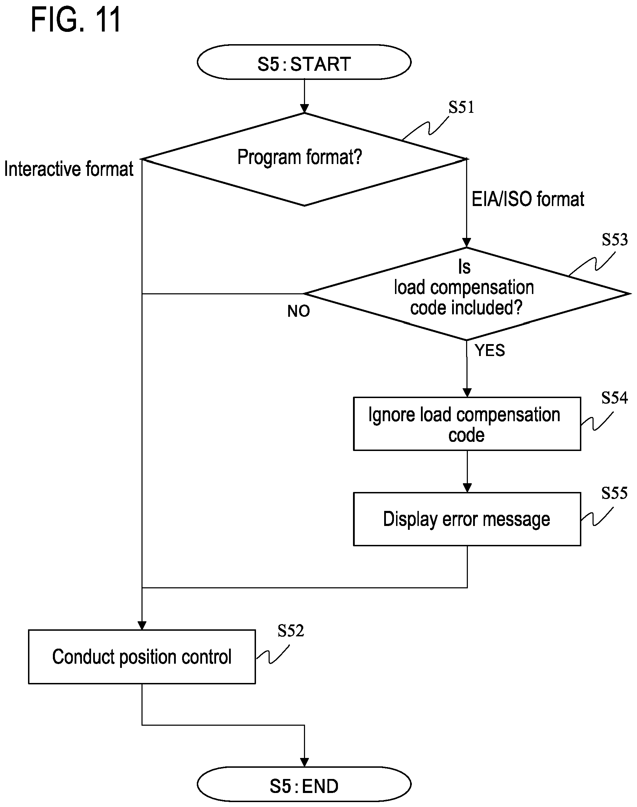

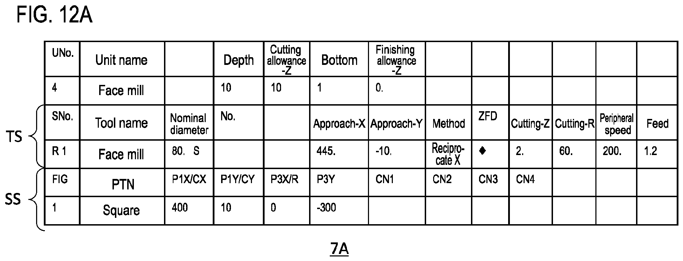

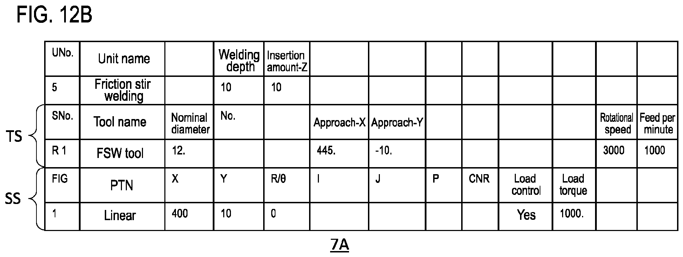

FIG. 8 is a flowchart of detailed operations of step S2. FIG. 9 is a flowchart of detailed operations of step S3. FIG. 10 is a flowchart of detailed operation of step S4. FIG. 11 is a flowchart of detailed operation of step S5. FIG. 12A is an example of the machining program 7 for the cutting. FIG. 12B is an example of the machining program 7 for the friction stir welding. The program format of the machining program 7 of FIGs. 12A and 12B will be referred to as an interactive format. Hereinafter, the machining program 7, which is written in the interactive format, will be referred to as a machining program 7A.

The machining program 7A is written in program codes for numerically controlling the combined machining apparatus 1. At least the following contents are defined in the machining program 7A.
(1) Common unit: Material and shape of pre-machined workpiece W1.
(2) Basic coordinate unit: Method for setting the workpiece coordinate system and the machine coordinate system.
(3) Machining unit: Machining methods and machined shapes of parts of final machined shape.
The common unit, the basic coordinate unit, and the machining unit each include a unit number.

FIGs. 12A and 12B each illustrate only the machining unit of the above-described units. The machining unit includes a unit number UNo., information for identifying a machining content (a unit name), a tool sequence TS for setting of the tool T1 or T2 and cutting conditions of the tool T1 or T2, and a shape sequence SS for specifying a machined shape to be machined in the machining unit. The tool sequence TS means a series of machining stages necessary for forming a machined shape (for example, one bar material, one screw hole) of a part specified in the machining unit. The shape sequence SS means an aggregation of segments defined by a start point and an end point of the cutting edge of a tool in a workpiece coordinate system for determining the machined shape, and a connection relationship indicating how the start point and the end point are connected to each other (such as by way of a line or an arc).

In the examples of FIGs. 12A and 12B, the machining unit includes one tool sequence TS and one shape sequence SS. However, the machining unit may include a plurality of tool sequences. In order to handle a complicated machined shape, the machining unit may include a plurality of shape sequences. In a case where the machining unit includes a plurality of tool sequences and a plurality of shape sequences, in performing the machining unit, first, the tool is moved so as to be capable of generating the shape indicated by all the shape sequences until the next tool sequence appears on the program for every one of the tool sequence in an arranged order of the tool sequences. Each tool sequence is distinguished by a sequence number SNo. Each shape sequence is distinguished by the number written in a FIG item.

In a case where the tool name is the FSW tool in the tool sequence TS, as illustrated in FIG. 12B, each of the shape sequences SS corresponding to the tool sequence TS includes a code ("load control") as to whether to conduct the load control, and a code ("load torque") that specifies the load. In FIG. 12B, the magnitude of the load torque (unit N•m) is represented as a numerical value of the "load torque". This example indicates a case where the code that specifies the load is the load torque, but the code may be a drive current value, or may be the load factor that has been described above. In the case of conducting the load control, the value of the "load control" is "Yes", and in the case of not conducting the load control, the value of the "load control" is "No". Here, the "load control" code including the value "Yes" and a "load torque" code will be collectively referred to as a load adjustment code for instructing the compensation of the position of the working tool TE based on the load. In the case where the value of the "load control" code of the shape sequence SS is "No", the shape sequence SS defines that the load adjustment code is not included.

Referring to FIGs. 8, 12A, and 12B, in step S2, in the case where the program format is the interactive format in step S21 of FIG. 8, the processor 3, which executes the control program 8 in the method, obtains the tool name of the tool sequence TS as a command indicating the working tool TE, in step S22. It is to be noted that in step S22, as additional processing, in the method, the processor 3, which executes the machining program 7, may obtain the tool name, the nominal diameter, and the suffix of the tool sequence TS, refer to the tool data 9, obtain the T code corresponding to a combination of the tool name, the nominal diameter, and the suffix that have been obtained, and perform processing of attaching the tool holder 17, which is held by the holding portion 15a, and which corresponds to the T code that has been obtained, to the spindle 12b.

In step S3, in the case where the program format is the interactive format in step S31 of FIG. 9, the processor 3, which executes the control program 8 in the method, determines whether the tool name of the tool sequence TS is the FSW tool, in step S33. In a case where the tool name is the FSW tool, the processor 3 determines that the working tool TE is the friction stir welding tool T1 until performing the next tool sequence TS (step S34). As described above, the program code in the interactive format includes a code associated with the load control in each shape sequence SS. Therefore, enabling the compensation of the position (load control) of the working tool TE based on the above-described load includes conducting the compensation of the position (load control) of the working tool TE based on the load applied to the rotation drive 14 in the friction stir welding with the working tool TE in the machining program 7, in a case where the load adjustment code for instructing the compensation of the position of the working tool TE based on the load is included in a part (shape sequence SS) that specifies the machining with the working tool TE in the machining program 7. Specifically, in step S4, in the case where the program format is the interactive format in step S41 of FIG. 10, the processor 3, which executes the control program 8 in the method, determines whether the shape sequence SS includes a load adjustment code, in step S42. In a case where the load adjustment code is included in the shape sequence SS (Yes in step S42), the processor 3, which executes the control program 8 in the method, conducts the load control until performing the next shape sequence SS (step S43). On the other hand, in a case where the load adjustment code is not included in the shape sequence SS (No in step S42), the processor 3, which executes the control program 8 in the method, conducts neither the load control nor the position control in the part (shape sequence SS) that specifies the machining with the working tool TE in the machining program 7A, in step S44.

In step S3, in the case where the program format is the interactive format in step S31 of FIG. 9, and in the case where the tool name of the tool sequence TS is not the FSW tool in step S33, the processor 3, which executes the control program 8 in the method, determines that the working tool TE is the cutting tool T2 (step S35). In this situation, enabling the compensation of the position (position control) of the working tool TE based on the above-described temperatures includes estimating the position offset (thermal displacement) from the position of the cutting edge of the working tool TE in a case where the temperatures detected by the temperature sensors 21a to 21c are each the reference temperature, based on the temperatures that have been detected by the temperature sensors 21a to 21c, and conducting the compensation of the position (position control) of the working tool TE based on the position offset (thermal displacement) in the cutting. Specifically, in step S5, in the case where the program format is the interactive format in step S51 of FIG. 11, and in the case where the tool name of the tool sequence TS is not the FSW tool, the processor 3, which executes the control program 8 in the method, conducts the position control in step S52 until performing the next tool sequence TS.

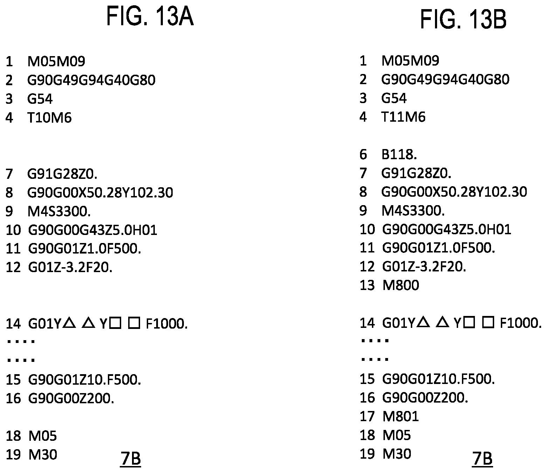

The machining program 7 is not limited to the examples of FIGs. 12A and 12B, and may be a machining program 7 based on Electronic Industries Association (EIA)/International Organization for Standardization (ISO) format. The program format of the machining program 7 of FIGs. 13A and 13B will be referred to as a machining program 7B. FIG. 13A illustrates the machining program 7B with the cutting tool T2, and FIG. 13B illustrates the machining program 7B with the friction stir welding tool T1. Referring to the codes in row numbers 4 of FIGs. 13A and 13B, with regard to the machining program 7B based on the EIA/ISO format, it is possible to determine whether the tool is the friction stir welding tool T1 or the cutting tool T2 from the T code written immediately before an M6 code.

Specifically, in step S2, in the case where the program format is the EIA/ISO format in step S21 of FIG. 8, the processor 3, which executes the control program 8 in the method, obtains the T code as the command indicating the working tool TE from the machining program 7B in step S23. In step S3, in the case where the program format is the EIA/ISO format in step S31 of FIG. 9, the processor 3, which executes the control program 8 in the method, refers to the tool information (tool data 9), and obtains the tool name corresponding to the T code in step S32.

In the example of FIG. 13A, the T code that has been read from the machining program 7B is T10, and the tool name of the working tool TE having the T code of T10 is a face mill with reference to the tool data 9. Thus, it is determined that the working tool TE is the cutting tool T2. That is, in step S33 of FIG. 9, in the case where the tool name of the tool sequence TS is not the FSW tool, the processor 3, which executes the control program 8 in the method, determines that the working tool TE is the cutting tool T2 (step S35). In the example of FIG. 13B, the T code that has been read from the machining program 7B is T11 and the tool name of the working tool TE having the T code of T11 is the FSW tool with reference to the tool data 9. Thus, it is determined that the working tool TE is the cutting tool T2. That is, the hardware processor 3, which executes the control program 8 in the method, determines whether the tool name of the tool sequence TS is the FSW tool in step S33 of FIG. 9, and in the case where the tool name is the FSW tool, the hardware processor 3 determines that the working tool TE is the friction stir welding tool T1 until performing the next tool sequence TS (step S34).

In the programming in the EIA/ISO format, there is no demand for including a special code associated with the position control in the program code. However, there is a demand for including a special code associated with the load control in the program code. Referring to FIG. 13B, after a command for being exchanged with the friction stir welding tool T1 in accordance with an M6 code, the machining program 7B with the friction stir welding tool T1 includes a B118. code (the code of a row number 6 in FIG. 13B) that specifies the load. In this code, subsequent to B, target load torque (unit N•m) is represented. The machining program 7B with the friction stir welding tool T1 includes, subsequent to a code for designating the coordinates, an M800 code (a code of a row number 13 of FIG. 13B) for conducting the load control. The machining program 7B with the friction stir welding tool T1 includes, subsequent to a code for moving the friction stir welding tool T2, an M801 code (a code in a row number 17 of FIG. 13B) for releasing the load control. Here, the B118. code and the M800 code will be collectively referred to as a load adjustment code for instructing the compensation of the position of the working tool TE based on the load.

In the program code in the EIA/ISO format, unless the tool name corresponding to the T code is the FSW tool, the above-described position control is conducted by default. However, in a case where the tool name corresponding to the T code is not the FSW tool and the program code in the EIA/ISO format includes the load adjustment code, the combined machining apparatus 1 displays an error message like "M800 code (alternatively, the B118. code or the M801 code) that is invalid for the program is included, but it was ignored", ignores the load adjustment code, and conducts the position control. In addition, in a case where the tool name corresponding to the T code is the FSW tool and the program code in the EIA/ISO format includes the load adjustment code, the combined machining apparatus 1 conducts the load control in accordance with the code. In a case where the tool name corresponding to the T code is the FSW tool and the program code in the EIA/ISO format does not include the load adjustment code, the combined machining apparatus 1 conducts neither the position control nor the load control.

The fact that the machining program 7B illustrated in FIG. 13A does not include any code associated with the compensation of the position of the working tool TE based on the temperatures that have been detected by the temperature sensors 21a to 21c does not mean that the processor 3, which executes the control program 8, does not conduct the position control. Enabling the compensation of the position (position control) of the working tool TE based on the temperatures in the case where the working tool TE is the cutting tool T2 includes estimating the position offset (thermal displacement) from the position of the cutting edge of the working tool TE in the case where the temperatures that have been detected by the temperature sensors 21a to 21c are each the reference temperature based on the temperatures that have been detected by the temperature sensors 21a to 21c, and conducting the compensation of the position (position control) of the working tool TE based on the position offset (thermal displacement) in the cutting. Specifically, in step S5, in a case where the program format is the EIA/ISO format in step S51 of FIG. 11 and the code of the machining process to be called by the machining program 7 does not include the load adjustment code (No in step S53), the processor 3, which executes the control program 8 in the method, conducts the position control in the part that specifies the machining with the working tool TE in the machining program 7B in step S52. That is, the processor 3, which executes the control program 8 in the method, conducts the position control until the tool is exchanged with another tool in accordance with the M6 code or the machining program 7B ends in accordance with the M30 code.

On the other hand, for example, as in the case where the T code is not T11 in the code of FIG. 13B, but it is T10, in a case where the program format is the EIA/ISO format in step S51 of FIG. 11 related to step S5 and the code of the machining process to be called by the machining program 7 includes the load adjustment code (Yes in step S53), the processor 3, which executes the control program 8 in the method, ignores the load adjustment code in step S54, even though the load adjustment code for instructing the compensation of the position of the working tool TE based on the load is included in the part that specifies the machining with the working tool TE in the machining program 7B. That is, enabling the compensation of the position (position control) of the working tool TE based on the temperatures includes ignoring the load adjustment code, even though the load adjustment code for instructing the compensation of the position of the working tool TE based on the load is included in the part that specifies the machining with the working tool TE in the machining program 7B. Then, in step S55, the processor 3, which executes the control program 8 in the method, causes the display device 10b to display an error message. That is, enabling the compensation of the position (position control) of the working tool TE based on the temperatures includes notifying the error message, in a case where the load adjustment code for instructing the compensation of the position of the working tool TE based on the load is included in the part that specifies the machining with the working tool TE in the machining program 7B. When the processing of step S55 ends, the processor 3, which executes the control program 8 in the method, performs step S52.

In addition, enabling the compensation of the position (load control) of the rotation drive 14 based on the load applied to the working tool TE in step S4 includes executing the load adjustment code (step S43), in the case where the program format is the EIA/ISO format in step S41 and the load adjustment code is included in the part that specifies the machining with the working tool TE in the machining program 7B (Yes in step S45). Specifically, the processor 3, which executes the control program 8 in the method, conducts the load control based on the load adjustment code, after the M800 code is called and until the M801 code is called.

On the other hand, for example, as in the case where the T code is not T10 in the code of FIG. 13A, but it is T11, in a case where the program format is the EIA/ISO format in step S41 of FIG. 9 related to step S4 and the load adjustment code is not included in the machining process code (the part that specifies the machining with the working tool TE in the machining program 7B) to be called by the machining program 7 (No in step S45), the processor 3, which executes the control program 8 in the method, conducts neither the load control nor the position control in step S44 in the part that specifies the machining with the working tool TE in the machining program 7B. That is, enabling the compensation of the position (load control) of the working tool TE based on the load includes conducting neither the compensation of the position (load control) of the working tool TE based on the load applied to the rotation drive 14 nor the compensation of the position (load control) of the working tool TE based on the temperatures, unless the load adjustment code is included in the part that specifies the machining with the working tool TE in the machining program 7B. In this situation, the processor 3, which executes the control program 8 in the method, moves the working tool TE, based only on the code for moving the working tool TE (the code of row numbers 14 in FIGs. 13A and 13B).

The control program 8 also has a function of editing the tool information registered in the tool data 9. Specifically, the processor 3, which executes the control program 8 in the method, performs processing of displaying, on the display device 10b, texts or indicators such as icons corresponding to the items illustrated in the first rows of FIGs. 7A and 7B and an input form such as a text box or a list box corresponding to the contents illustrated in the second rows of FIGs. 7A and 7B. The processor 3, which executes the control program 8 in the method, performs processing of storing, in the memory 4, the information that has been input into the input form by the user via the input interface 10a. That is, the processor 3, which executes the control program 8 in the method, performs processing of storing, in the storage means, the tool information that has been input by the user. It is to be noted that the input interface 10a and the display device 10b are each an interface for the user to input the tool information.

### <Features and Effects of Method for Controlling Combined Machining Apparatus according to the Present Embodiment>

Upon determination that the working tool TE is the cutting tool T2, the combined machining apparatus 1 and the method thereof according to the present embodiment includes enabling compensation of the position of the working tool TE in the cutting, based on the temperatures that have been detected by the temperature sensors 21a to 21c, which are provided on the combined machining apparatus 1 or the cutting tool T2. Upon determination that the working tool TE is the friction stir welding tool T1, the combined machining apparatus 1 and the method thereof according to the present embodiment includes enabling compensation of the position of the working tool TE in the friction stir welding, based on the load applied to the rotation drive 14. This enables automatically switching between the position control and the load control in accordance with the type of the tool.

### <Modifications>

In step S4 in the above-described embodiment, the case where the load applied to the rotation drive 14 is calculated from the drive current to be fed as a command current to the rotation driver 23 has been described as an example. However, the load applied to the rotation drive 14 may be calculated by using the drive current to be fed from the rotation driver 23 to the rotation drive 14. The torque applied to the DC motor is calculable from the drive current value directly applied to the DC motor from the above-described torque characteristic. In addition, the torque applied to the AC induction motor or the AC synchronous motor, when vector-control is conducted, is calculable by converting a three-phase current value directly applied to each motor into two phases, then calculating the q-axis current, calculating a torque conversion coefficient from the relationship between the number of rotations that has been stored beforehand in the numerical controller 2 and the torque, and multiplying the calculated torque conversion coefficient by the q-axis current. However, a different torque conversion coefficient has to be stored depending on the type of the AC motor.

In the above-described embodiments, the example has been given in which the combined machining apparatus 1 handles both program formats in the interactive format and the EIA/ISO format. However, it may handle only one of the program formats. In such a case, steps S21, S41, and S51 may be omitted in FIGs. 8 to 10, and processing in the program format that the combined machining apparatus 1 does not handle may be omitted.

In the above-described embodiments, the example has been given in which the combined machining apparatus 1 is a vertical machining center. However, also in a combined machining apparatus including a horizontal machining center, a lathe, and an additional manufacturing apparatus, the contents in the present embodiment are applicable, as long as both the cutting and friction stir welding are available.

Some or all of the functions of the logic of the control program 8 of the numerical controller 2 described above may be implemented by a dedicated processor or integrated circuit. The above-described control program 8, without being limited to a program recorded in the memory 4, which is built in the numerical controller 2, may be a program recorded in a storage medium removable from the numerical controller 2 and readable by the numerical controller 2, such as a disk including a floppy disk, an optical disk, a CD-ROM, and a magnetic disk, an SD card, a USB memory, or an external hard disk.

As used herein, the term "comprise" and its variations are intended to mean openended terms, not excluding any other elements and/or components that are not recited herein. The same applies to the terms "include", "have", and their variations.

As used herein, a component suffixed with a term such as "member", "portion", "part", "element", "body", and "structure" is intended to mean that there is a single such component or a plurality of such components.

As used herein, ordinal terms such as "first" and "second" are merely used for distinguishing purposes and there is no other intention (such as to connote a particular order) in using ordinal terms. For example, the mere use of "first element" does not connote the existence of "second element"; otherwise, the mere use of "second element" does not connote the existence of "first element".

As used herein, approximating language such as "approximately", "about", and "substantially" may be applied to modify any quantitative representation that could permissibly vary without a significant change in the final result obtained. All of the quantitative representations recited in the present application shall be construed to be modified by approximating language such as "approximately", "about", and "substantially".

As used herein, the phrase "at least one of A and B" is intended to be interpreted as "only A", "only B", or "both A and B".

Obviously, numerous modifications and variations of the present disclosure are possible in light of the above teachings. It is therefore to be understood that within the scope of the appended claims, the present disclosure may be practiced otherwise than as specifically described herein.

## Claims

1. A method for controlling a combined machining apparatus to perform cutting and friction stir welding, the method comprising:
obtaining tool information indicating whether each of a plurality of tools attachable to the combined machining apparatus is a cutting tool or a friction stir welding tool;
obtaining a command indicating a working tool of the plurality of tools to be called by a machining program executed by the combined machining apparatus;
determining whether the working tool is the cutting tool or the friction stir welding tool, based on the tool information and the command;
upon determination that the working tool is the cutting tool, enabling compensation of a position of the working tool in the cutting, based on a temperature detected by a temperature sensor provided in the combined machining apparatus; and
upon determination that the working tool is the friction stir welding tool, obtaining a load applied to a motor that rotates the working tool and enabling the compensation of the position of the working tool based on the load in the friction stir welding.

2. The method according to claim 1,
wherein obtaining the load applied to the motor includes obtaining either a drive current of the motor or drive torque of the motor.

3. The method according to claim 1 or 2,
wherein the compensation of the position of the working tool based on the load is compensation of a position in a rotation axis direction of the working tool.

4. The method according to one of claims 1 to 3,
wherein enabling the compensation of the position of the working tool based on the temperature includes estimating a position offset from a position of a cutting edge of the working tool in a case where the temperature detected by the temperature sensor is a reference temperature, based on the temperature detected by the temperature sensor, and performing the compensation of the position of the working tool in the cutting, based on the position offset.

5. The method according to claim 5,
wherein enabling the compensation of the position of the working tool based on the temperature includes ignoring a load adjustment code, even though the load adjustment code for instructing the compensation of the position of the working tool based on the load is included in a part that specifies machining with the working tool in the machining program.

6. The method according to claim 5,
wherein enabling the compensation of the position of the working tool based on the temperature includes notifying an error message, in a case where the load adjustment code for instructing the compensation of the position of the working tool based on the load is included in the part that specifies the machining with the working tool in the machining program.

7. The method according to one of claims 1 to 6,
wherein enabling the compensation of the position of the working tool based on the load includes executing a load adjustment code, in a case where the load adjustment code for instructing the compensation of the position of the working tool based on the load is included in a part that specifies machining with the working tool in the machining program.

8. The method according to claim 7,
wherein enabling the compensation of the position of the working tool based on the load includes performing neither the compensation of the position of the working tool based on the load nor the compensation of the position of the working tool based on the temperature, unless the load adjustment code is included in the part that specifies the machining with the working tool in the machining program.

9. The method according to one of claims 1 to 8, further comprising storing, in storage means, the tool information input by a user,
wherein obtaining the tool information includes reading the tool information from the storage means.

10. The method according to one of claims 1 to 9,
wherein the compensation of the position of the working tool based on the load includes performing feedback-compensation of the position of the working tool without a significant change in the load.

11. A program comprising an instruction for causing a hardware processor to perform processing of the method according to one of claims 1 to 10, when the hardware processor of the combined machining apparatus performs the processing.

12. A combined machining apparatus comprising:
means for performing the method according to one of claims 1 to 10;
storage means configured to store the tool information;
a spindle to which the cutting tool and the friction stir welding tool are both attachable;
a motor configured to rotate the spindle;
a driver configured to send a drive signal for driving the motor; and
the temperature sensor.

13. The combined machining apparatus according to claim 12, further comprising:
a tool magazine capable of storing both the cutting tool and the friction stir welding tool; and
a tool exchanger configured to exchange tools between the tool magazine and the spindle.

14. The combined machining apparatus according to claim 12 or 13, further comprising an interface for a user to input the tool information.

15. The combined machining apparatus according to one of claims 12 to 14,
wherein the storage means is a memory, and
wherein means for performing processing of the method according to one of claims 1 to 10 includes the program according to claim 11 stored in the memory, and a hardware processor that executes the program.
